Europäisches Patentamt

European Patent Office

Office européen des brevets

(11) Publication number: **0 173 239**
**B1**

# (12) EUROPEAN PATENT SPECIFICATION

(45) Date of publication of patent specification: **20.12.89**

(51) Int. Cl.⁴: **B 60 J 5/04,** B 60 R 13/06

(21) Application number: **85110474.5**

(22) Date of filing: **20.08.85**

(54) **Construction of door frame in motor vehicle.**

(30) Priority: **24.08.84 JP 128069/84**

(43) Date of publication of application:
**05.03.86 Bulletin 86/10**

(45) Publication of the grant of the patent:
**20.12.89 Bulletin 89/51**

(84) Designated Contracting States:
**DE FR GB**

(56) References cited:
**EP-A-0 126 895**
**DE-A-3 235 026**
**DE-B-1 117 419**
**US-A-3 171 165**

(73) Proprietor: **TOYOTA JIDOSHA KABUSHIKI KAISHA**
**1, Toyota-cho Toyota-shi**
**Aichi-ken 471 (JP)**

(72) Inventor: **Okumura, Katsuhiro**
**TOYOTA JIDOSHA KABUSHIKI KAISHA 1,**
**Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

This invention relates to a construction of a door frame of a motor vehicle, according to the pre-characterizing portion of claim 1.

In a door of a motor vehicle, a door frame has heretofore been provided with a door weather strip for sealing a space formed between the door and a vehicle body and a seal member for guiding a door glass in its opening or closing direction and sealing a space formed between the door frame and the door glass.

DE—B—1 117 491 discloses a door frame consisting of two plate members forming a first channel for receiving a door glass and a second channel for receiving a door weather strip. In case of this construction of a door frame, the first channel serving to guide the door glass and the second channel receiving the door weather strip in a closed status of the door are arranged successively in the longitudinal direction of the vehicle. This provokes a reduction of the transparent surface of the upper portion of the door as well as a disturbed asthetic appearance of the slide part of the vehicle.

It is the object of the present invention to create a construction of a door frame by which the asthetic appearance of the vehicle can be improved and the transparent part of the upper portion of the vehicle door can be enlarged, and by which at the same time, a place-saving design sufficiently stiff against torsion of the door frame can be guaranteed.

According to the invention, this problem is according to the invention solved by the features specified in the characterizing portion of claim 1. The adjacent arrangement of the seal member guiding the door glass and the door weather strip in the widthwise direction of the vehicle provides a considerable enlargement of the opening area of the door glass. The portion of the door frame receiving the door weather strip is arranged adjacent the first channel in the widthwise direction of the vehicle, on the compartment side of the door frame. In this construction, the inner side face of the seal member and the outer side face of the door weather strip are arranged opposite to each other; two wall members are arranged in parallel to the door glass between the two channels. Between these two wall members, a closed section guaranteeing a sufficient stiffness of the door frame against torsion is arranged. Despite the quasi-laminar contact between both plate members forming the door frame, due to the closed section, a sufficient stiffness against torsion is guaranteed.

According to the invention, the main extension of the cross section of the door frame extends in the widthwise direction of the vehicle.

EP—A—0 099 451 shows a construction of a door frame in case of which a seal member is positioned on a flange formed by the inner and outer sheet of the door frame. The weather strip for seal between the vehicle and the door is positioned on a flange designed a the window post which is rigidly connected with the vehicle body, for receiving the seal member, a flange is formed of a portion of the inner sheet and a portion of the outer sheet.

Advantageous modifications of the invention derive from the subclaims.

Fig. 1 is a perspective view showing the motor vehicle, to which the present invention is applicable;

Figs. 2 and 3 are enlarged sectional views taken along the lines II—II and III—III in Fig. 1, showing an embodiment of the construction of a door frame of a motor vehicle according to the present invention; and

Fig. 4 is a sectional view showing a second embodiment of the present invention, similar to Fig. 2.

Description will hereunder be given of the embodiments of the present invention with reference to the drawings.

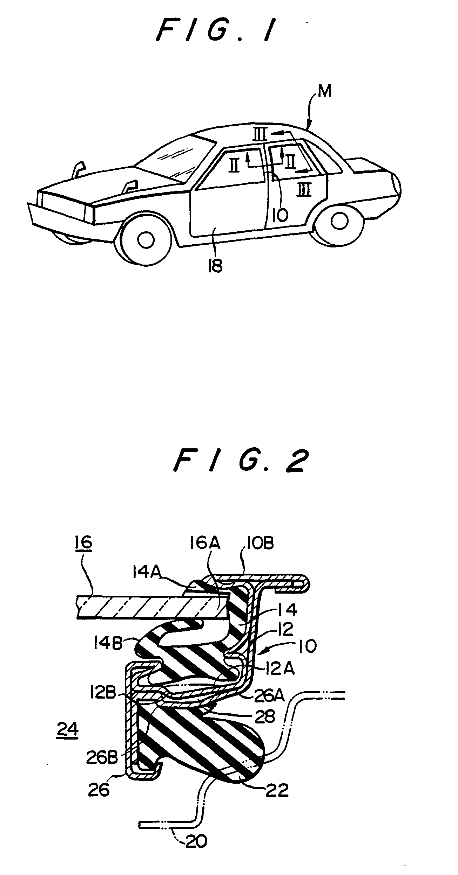

As shown in Figs. 1 and 2, in a construction of a door frame of a motor vehicle M, an end edge 16A of a door glass 16 is brought into sliding contact with a seal member 14 of a first channel 12 on the side of a door frame 10 produced by rolling a plate member so as to guide the door glass 16 in the vertical direction; and a door weather strip 22 for sealing a space formed between a door 18 and a center pillar 20 of a vehicle body, when the door 18 is closed, is mounted to the door frame 10; the door weather strip 22 is disposed adjacent the first channel 12 on the side of a compartment 24 in a second channel 26; wall members 12A and 26A disposed adjacent to each other, and forming the channels 12, 26 holding the seal member 14 and the door weather strip 22 are formed by bending two plate members into a two-ply shape, and a closed section 28 is formed therebetween.

The first channel 12 and the second channel 26 are in parallel to each other opening in directions opposite to each other. The wall members 12A and 26A are side walls being generally in parallel to the door glass 16.

The wall member 26A is convexed toward the door weather strip 22 and is formed with a stepped portion 26B, and, the wall member 12A is similarly convexed toward the door weather strip 22 and is formed with a stepped portion 12B. The stepped portion 12B is engageable with the stepped portion 26B.

The seal member 14 is provided with an outer lip 14A slidably contacting the outer surface of the end edge 16A of the door glass 16 and an inner lip 14B slidably contacting the surface of the end edge 16A on the side of the compartment 24, whereby the seal member 14 additionally functions as a door glass run.

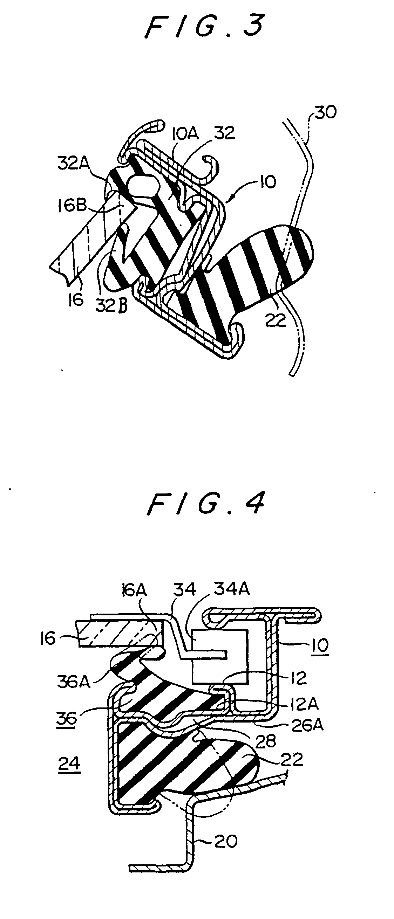

Furthermore, a seal member 32 mounted to a top side member 10A of a door frame 10, including an inclined side member and a horizontal side member, which are disposed along a roofside rail 30 on the vehicle body, is provided with an outer lip 32A contacting the forward end and outer surface of a top end edge 16B, when the door glass 16 is fully closed, and an inner lip 32B contacting the inner surface of the top end edge 16B, as shown in Fig. 3.

The top side member 10A of the door frame 10 is contiguous to a vertical side member 10B shown in Fig. 2 and has a sectional form generally identical with the vertical side member 10B.

In the above embodiment, the wall members 12A and 26A adjacent to each other in the first channel 12 for holding the seal member 14 and the second channel 26 for holding the door weather strip 22 provided adjacent to the first channel 12 on the side of the compartment 24 are formed of plate members separate of each other, and the closed section 28 is formed therebetween, so that a force of resisting a torsional force, etc. acting on the door frame 10, i.e. a torsional rigidity can be increased to a considerable extent.

In the above embodiment, particularly, such an arrangement is adopted that the stepped portion 12B of the wall member 12A and the stepped portion 26B of the wall member 26A are engageable wtih each other, whereby the closed section 28 has a generally elongate triangular shape, so that the wall member 12B can function as a bracing to control the deformation of the closed section portion.

In consequence, for example, even if a force acts which sucks the door glass 16 outwardly to the outboard direction due to the difference in pressure between the exterior and the interior of the compartment 24 during running of the motor vehicle at high speed, no deformation is caused by this force and the seal member 14 and/or the door weather strip 22 are not lowered in sealing performance.

Additionally, in the above embodiment, the first channel 12 and the second channel 26 open in directions opposite to each other and are disposed in parallel to the door glass 16, and the length of the door weather strip 22 held by the second channel 26 in the direction parallel to the door glass 16 is substantially equal to the first channel 12, so that the door frame 10 can be made compact in size.

Furthermore, in the above embodiment, the end edge 16A of the door glass 16 is directly guided in the direction of opening or closing of the door glass 16 by the seal member 14 additionally functioning as the glass run; however, for example, the guiding may be performed through a slide piece mounted to the end edge 16A.

Namely, an arrangement shown in Fig. 4 may be adopted.

The second embodiment shown in Fig. 4 is of such an arrangement that to the end edge 16A of the door glass 16 is mounted a slider 34 provided at the forward end thereof with a slide portion 34A shifted into the compartment 24.

The slide portion 34A is directly, slidably guided in the vertical direction by the first channel 12 of the door frame 10.

Additionally, a seal member 36 is provided only with the inner lip 36A contacting an inner edge surface of the end edge 16A of the door glass 16.

The second embodiment is identical in other respects with the first embodiment shown in Fig. 2, therefore, same reference numerals are used to designate same or similar parts, so that the detailed description thereof need not be repeated.

In this second embodiment, the slide portion 34A of the slider 34 is shifted into the compartment 24 relative to the door glass 16, so that the outer surface of the door glass 16 can be made substantially flush with the outer surface of the door frame 10 to thereby improve the so-called flush-surfacing.

In this second embodiment, the wall member 12A of the first channel 12 for holding the seal member 36 and the wall member 26A of the second channel 26 for holding the door weather strip 22 are formed into a two-ply shape in the same manner as in the first embodiment, and the closed section 28 is formed therebetween, so that the section stiffness can be increased to a considerable extent.

In addition, in the above embodiment, the closed section 28 formed between the wall members 12A and 26A is formed into the elongate shape in parallel to these wall members 12A, 26A; however, the closed section 28 can be elongated within the scope of not interfering with the seal member 14 and/or the door weather strip 22.

In consequence, for example, the wall member 12A may be raised in a direction of the seal member 14 as indicated by a two-dot chain line in Fig. 2, to thereby increase the area of the closed section 28.

## Claims

1. A construction of a door frame (10) of a motor vehicle (M), comprising a first channel (12) and a second channel (26) being disposed adjacent to each other, said first and second channels (12, 26) of said door frame (10) being formed by two rolled plate members connected with each other, a seal member (14, 36) for sealing against an end edge (16A) of a door glass (16) being mounted in said first channel and a door weather strip (22) for sealing a space between the door (18) and a vehicle body being disposed in said second channel (26), said two plate members comprising two wall members (12A, 26A) of said channels being located between said two channels and forming a closed section (28) between each other, characterized in that said door frame (10) comprising said two channels (12, 26) is in cross section generally shaped like a crank comprising two offset shaft-like portions and a web portion interconnecting the shaft-like portions, in that said two wall members (12A, 26A) forming said closed section (28) are generally in parallel to the door glass (16) and define the web portion of said crank-shaped cross section, in that said two plate members are superimposed onto each other substantially over the whole length of the two shaft-like portions of said crank-shaped cross section and in that each of said shaft-like portions forms a wall of one of said two channels (12, 26), with said second channel (26) being located at the compartment (24) side of said door frame (10).

2. A construction of a door frame of a motor vehicle as set forth in claim 1, wherein said two wall members (26A, 12A) are convexed toward said door weather strip (22) and formed with stepped portions (26B, 12B) which are engageable with each other.

3. A construction of a door frame of a motor vehicle as set forth in claim 2, wherein said closed section (28) has generally elongate triangular shape, so that the outer one (12A) of said two wall members (12A, 26A) function as a bracing to control the deformation of said closed section (28).

4. A construction of a door frame of a motor vehicle as set forth in claim 1, 2 or 3, wherein the length of said door weather strip (22) held by said second channel (26) in the direction parallel to said door glass (16) is substantially equal to said first channel (12).

5. A construction of a door frame of a motor vehicle as set forth in any one of claims 1 to 4, wherein said end edge (16A) of said door glass (16) is directly guided in its opening or closing direction by said seal member (36) additionally functioning as glass run.

6. A construction of a door frame of a motor vehicle as set forth in any one of claims 1 to 5, wherein to said end edge (16A) of said door glass (16) is mounted a slider (34) provided at its forward end with a slide portion (34A) shifted into the compartment (24), the slide portion (34A) being directly and slidably guided in the vertical direction by said first channel (12) of said door frame (10).

**Patentansprüche**

1. Aufbau für einen Türrahmen (10) eines Kraftfahrzeugs (M) mit einem ersten Kanal (12) und einem zweiten Kanal (26), die nebeneinander angeordnet und durch zwei miteinander verbundene, gewalzte plattige Elemente gebildet sind, einem Dichtungselement (14, 36) zur Abdichtung gegen einen Abschlußrand (16A) eines Türglases (16), wobei das Dichtungselement (14, 36) in dem ersten Kanal sitzt, und einer Türdichtungsleiste (22) zur Abdichtung eines Raums zwischen der Tür und einem Fahrzeugkörper, wobei die Türdichtungsleiste (22) in dem zweiten Kanal (26) angeordnet ist, wobei die beiden plattigen Elemente zwei Wandelemente (12A, 26A) der Kanäle aufweisen, die zwischen den beiden Kanälen angeordnet sind und einen abgeschlossenen Abschnitt (28) zwischen sich ausbilden, dadurch gekennzeichnet, daß der Türrahmen (10), der die beiden Kanäle (12, 26) aufweist, im Querschnitt etwa die Form einer Kurbel mit zwei gekröpften wellenartigen Abschnitten und einem die wellenartigen Abschnitte verbindenden Stegabschnitt aufweist, daß die beiden Wandelemente (12A, 26A), die den abgeschlossenen Abschnitt (28) bilden, etwa parallel zum Türglas (16) verlaufen und den Stegabschnitt des kurbelförmigen Querschnitts ausbilden, daß die beiden plattigen Elemente einander etwa über die gesamte Länge der beiden wellenartigen Abschnitte des kurbelförmigen Querschnitts überlagern und daß jeder wellenartige Abschnitt eine Wand eines der beiden Kanäle (12, 26) bildet, wobei der zweite Kanal (26) auf der dem Fahrzeuginnenraum (24) zugewandten Seite des Türrahmens (10) angeordnet ist.

2. Aufbau für einen Türrahmen eines Kraftfahrzeugs nach Anspruch 1, bei dem die beiden Wandelemente (26A, 12A) in Richtung auf die Türdichtungsleiste (22) konvex sind und abgestufte Abschnitte (26B, 12B) aufweisen, die miteinander in Eingriff bringbar sind.

3. Aufbau für einen Türrahmen eines Kraftfahrzeugs nach Anspruch 2, bei dem der abgeschlossene Abschnitt (28) etwa eine längliche dreieckige Form hat, so daß das äußere (12A) der beiden Wandelemente (12A, 26A) als Abstützelement zur Regelung der Deformation des abgeschlossenen Abschnitts (28) fungiert.

4. Aufbau für einen Türrahmen eines Kraftfahrzeugs nach Anspruch 1, 2 oder 3, bei dem die Länge der Türdichtungsleiste (22), die durch den zweiten Kanal (26) gehalten ist, in Parallelrichtung zum Türglas (16) etwa gleich dem ersten Kanal (12) ist.

5. Aufbau für einen Türrahmen eines Kraftfahrzeugs nach einem der Ansprüche 1 bis 4, bei dem der Abschlußrand (16A) des Türglases (16) in seiner Öffnungs- oder Schließrichtung unmittelbar durch das Dichtungselement (36) geführt ist, welches zusätzlich als Glasführung dient.

6. Aufbau für einen Türrahmen eines Kraftfahrzeugs nach einem der Ansprüche 1 bis 5, bei dem am Abschlußrand (16A) des Türglases (16) ein Gleitstück (34) angebracht ist, das an seinem vorderen Ende mit einem Gleitabschnitt (34A) versehen ist, der in den Fahrzeuginnenraum (24) versetzt ist und in Vertikalrichtung unmittelbar und verschiebbar durch den ersten Kanal (12) des Türrahmens (10) geführt ist.

**Revendications**

1. Structure de cadre (10) de portière de véhicule automobile (M), comprenant un premier canal (12) et un second canal (26) qui sont disposés au voisinage l'un de l'autre, lesdits premier et second canaux (12, 26) dudit cadre (10) de portière comportant deux élément de tôle reliés entre eux, un organe d'étanchéité (14, 36), destiné à assurer l'étanchéité par rapport à un coin d'extrémité (16A) d'une vitre (16) de portière, étant monté dans ledit premier canal, et une bande (22) d'étanchéité de portière destinée à assurer l'étanchéité d'un espace situé entre la porte (18) et la carrosserie du véhicule, étant disposée dans le second canal (26), lesdits deux éléments en tôle comprenant deux éléments de parois (12A, 26A) desdits canaux, qui sont situés entre les dits deux canaux et qui forment entre eux une section fermée (28), caractérisée en ce que ledit cadre (10) de portière comprenant lesdits deux canaux (12, 26) a une section transversale en forme de manivelle comprenant deux parties semblables à des arbres décalées et une partie de bras reliant les parties semblables à des arbres, en ce que lesdits deux éléments de parois (12A, 26A) formant ladite section fermée (28) sont généralement parallèles à la vitre (16) de portière, et définissent la partie de bras de ladite section transversale en forme de manivelle, en ce que lesdits deux éléments sont superposés l'un à l'autre sensiblement sur toute la longueur des deux parties semblables à des arbres de ladite section transversale en forme de manivelle et en ce que chacune desdites parties semblables à des arbres forme une paroi desdits deux canaux (12, 26), ledit second canal (26) étant situé du côté dudit cadre (10) de portière dirigé vers l'habitacle.

2. Structure de cadre de portière de véhicule automobile selon la revendication dans laquelle lesdits deux éléments de parois (26A, 12A) ont une forme convexe dont la convexité est dirigée vers ladite bande (22) d'étanchéité de portière et comportent des parties formant des degrés (26B, 12B) qui peuvent se mettre en prise mutuelle.

3. Structure de cadre de portière de véhicule automobile selon la revendication 2 dans laquelle ladite section fermée (28) a une forme triangulaire (12A) généralement allongée, de façon telle que celui des deux éléments de paroi (12A, 26A) qui est situé vers l'extérieur assume une fonction de renforcement en vue d'éviter la déformation de ladite section fermée (28).

4. Structure de cadre de portière de véhicule automobile selon les revendications 1, 2 ou 3 dans laquelle la longueur de ladite bande (22) d'étanchéité de portière maintenue par ledit second canal (26) dans une direction parallèle à ladite vitre (16) de portière, est sensiblement égale à celle dudit premier canal (12).

5. Structure de cadre de portière de véhicule automobile selon l'une quelconque des revendications 1 à 4 dans laquelle ledit coin d'extrémité (16A) de ladite vitre (16) de portière, est guidé sans entrave dans le sens de l'ouverture et dans le sens de la fermeture par ledit organe d'étanchéité (36) qui assume de plus la fonction de glissière de vitre.

6. Structure de cadre de portière de véhicule automobile selon l'une quelconque des revendications 1 à 5 dans laquelle sur ledit coin d'extrémité (16A) de ladite vitre de portière (16) est monté un coulisseau (34) comportant à son extrémité avant une partie de glissement (34A) décalée vers l'habitacle (24), la partie de glissement (34A) étant guidée sans entrave en glissant dans le sens vertical par ledit premier canal (12) dudit cadre (10) de portière.

# F I G . 1

# F I G . 2

# FIG.3

# FIG.4